# EUROPEAN PATENT SPECIFICATION

(11) **EP 1 423 662 B1**
(45) Date of publication and mention of the grant of the patent: **02.03.2005**
(21) Application number: 02763082.1
(22) Date of filing: 09.09.2002
(51) Int. Cl.: G01D 5/241

(54) **ABSOLUTE ANGLE ENCODER**
ABSOLUTER WINKELGEBER
DISPOSITIF DE CODAGE ANGULAIRE ABSOLU

(30) Priority: 07.09.2001 NL 1018908
(43) Date of publication of application: 02.06.2004
(73) Proprietor: AB SKF, S-415 50 Göteborg (SE)
(72) Inventor: VAN DER KAMP, Johannes, Haaye, NL-5056 KB Tilburg (NL); DUITS, Johannes, Andrianus, Maria, NL-2411 ZK Bodegraven (NL)
(74) Representative: van Westenbrugge, Andries
(86) International application number: PCT/NL2002/000584
(87) International publication number: WO 2003/023329

(56) References cited:
- US-A- 5 681 990

## Description

The present invention relates to an absolute displacement encoder comprising a sensing means with a segmented exciter element, a receiver element and a relative moving element incorporated either rotationally moveable or linearly moveable in the encoder between said exciter and said receiving element, including a part interfering in the electrical interaction between said exciter and said receiving element, and designed for movement with an external object, e.g. by mechanical coupling e.g. via a central shaft in case of a rotary angle encoder, the encoder further comprising an electronic signal source connected to said exciter element, and an analogue signal processing circuitry connected to said receiving element. More in particular, the present invention relates to an encoder as defined in the preamble of claim 1.

Such encoders are known from US patent US-A-5,681,990. In general, these encoders are produced in various forms, utilising different physical phenomena like optics, induction, magnetics, capacitance, and electronic resistance. All these phenomena are electronically sensed, and processed so as to realise an output in the form of an electronic signal readily usable by an electronic controller.

With the advance of electro-mechanical design in various dynamically operating structures of relatively low capital investments like vehicles, escavator beams and the like, it has became of utmost importance to realise a very low cost absolute angle encoder. Depending on the application it might be of importance to also have a fast and/or highly accurate operating encoder, which features for reasons of costs are most preferably realised simultaneously in one single encoder design.

One such relatively cost effective angle encoder is commercialised by the Beiduncan Company. In the sensor of this company the coupling element is related to the encoder means by an inductive coupling. The coupling features an excitation coil and receiving coil, spatially opposed in a commonly known manner at an operating distance allowing mutual influencing and allowing the in between passage of a rotating disc of non magnetic sensitive material such as copper, limiting the inductive coupling between the excitation coil and the receiving coils from very little blockage to complete blockage of the signal. The disc is associated with the coupling element and features "windows" of non magnetic material, such that some pairs of coils are influenced while others are not, depending on the angular position of the coupling element. The Beiduncan sensor features six pairs of coils of which the inductance is electronically read out by the electronic encoding means in sequential manner, which electronic means converts the reading into a sine wave of six parts, whose phase shift varies with respect to the rotation of the rotation disc. The sine wave is fed into a low pass filter and subsequently squared by a comparator. The absolute angle of the coupling elements and consequently of any object connected thereto is then a function of the phase shift of the scanning frequency and the squared sine wave.

The advantage of the Beiduncan principle is the insensitivity to contamination by non-magnetic materials like dust. Another advantage is the immediate conversion of the readings into a digital format. By this feature any said phase difference can easily be converted to a pulse-width modulated (PWM) signal. All of this leads to a relatively fast operating, low cost and readily manufacturable sensor.

A disadvantage of this sensor however, is that due to the inductive principle the sensor maybe disturbed by inductive material around the sensor and possible electromagnetic fields which are of the same frequency as the sensor excitation signal, leading to unreliability.

It is an obj ect of the present invention to overcome the disadvantage of this known sensor principle, while maintaining most if not all of its advantages, at least the cost-effective feature thereof. According to the invention such is favourably realised by an absolute displacement encoder according to the preamble defined above, having the features as defined in the characterising part of claim 1.

With an encoder according to the invention, a low cost sensor is achieved, insensitive to inductive materials for magnetic field from the environment application, while simultaneously the sensor is sufficiently fast and accurate for a very wide range of applications. In the sensor according to the invention a capacitive sensing principle is applied known per se, e.g. from the WO 9509349 patent publication, and from various subsequent publications on this subject by the Delft University of Technology (NL), including "Integrated Interfaces for Low Cost Multiple Sensor Systems", in J. of Intelligent Material Systems and Structures, Vol. 10 - Feb. 1999. The disadvantage of the said known capacitive method is that it requires a micro controller for A/D conversion and for calculations, which is for small micro controlled sensors a time consuming operation.

The above said capacitive sensor principle uses a rotating dielectric disc. For absolute sensing the dielectric disc is configured with distinctive circumferential sections, each subdivided in a number of segments, e.g. pie shaped, allowing a course and a fine reading. The capacity in this principle is measured differential at two places at 90 degrees spacing, which measurement is also known as the quadrature sine/cosine measurement. Thus four capacitances C1 to C4 are read out. The sine value is thus achieved as the subtraction of values C1 - C3, while the cosine is correspondingly achieved as C2 - C4. The actual angle can be calculated by taking the arc tangent of the sine/cosine. These sine and cosine values can be measured easily by using a well-known charge amplifier.

In the arrangement according to the invention the favourable features of both encoder principles have been combined by the replacement of the inductive coil means of the Beiduncan sensor for a modified version capacitive sensor means, in which the receiver element has at least, and preferably at most, one single receiver segment which overlaps all of the exciter segments as seen in plan view. In this manner both a simple encoder means and a relatively simple electronic circuit may be applied in the sensor as indicated by the claims and the description.

The invention will now be further elucidated by way of example according to a drawing in which:
FIGURE 1 is a schematic representation of the encoder according to the invention;
FIGURE 2 is an alternative embodiment of the encoder according to Figure 1;
FIGURE 3 is a schematic representation of a specific, favourable embodiment of the encoder according to the invention;
FIGURE 4 is a schematic representation of an alternative pattern of excitation of the encoder means.

In the figures corresponding elements are identified by identical reference numbers.

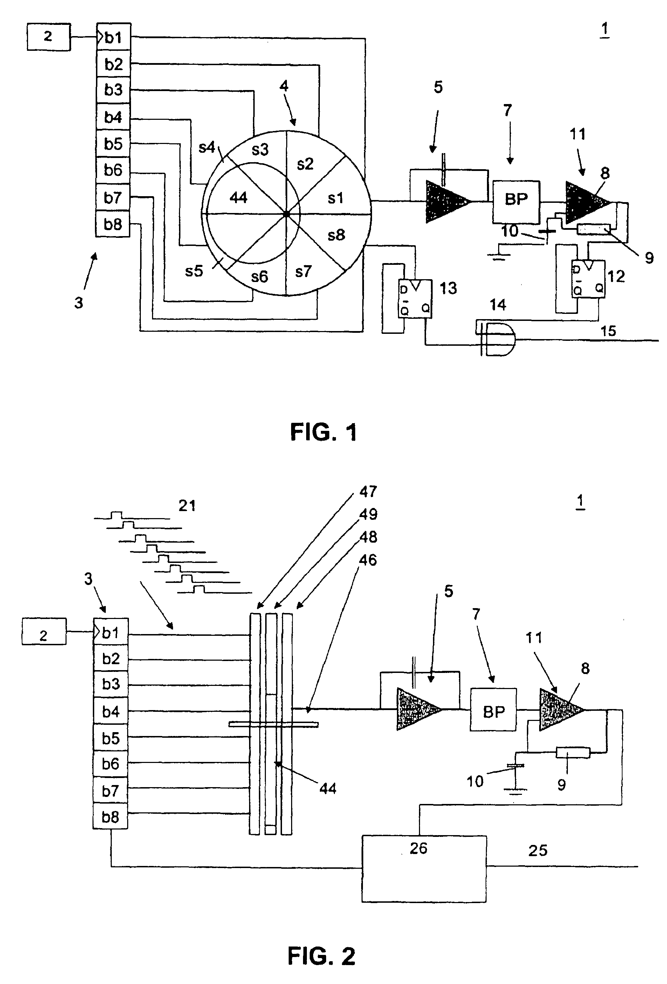

Figure 1 schematically represents an encoder 1 according to the invention, comprising a master clock 2 and a Johnston counter 3, which by counter parts b1-b8 sequentially provides individual excitation signals 21 at a predetermined frequency, sequentially to respective pie-shaped segments S1-S8 of an exciter disc 47 of a capacitive sensing means 4. The capacitance means 4 comprises an exciter disc 47, alternatively denoted transceiver disc, a receiver disc 48 and an intermediate rotating disc 49 rotating about a shaft 46 to which an external moving object may be connected, as more clearly depicted in the embodiment of Figure 2. The number of pie shaped segments in such arrangement according to the invention should be at least 3. It is remarked that the principles explained here are correspondingly applicable to a linear sensor by appropriately adapting the related components in the manner known per se.

The rotating disc 49 between the excitation disc 47 and the receiver disc 48, alternatively denoted sensor disc, is provided with an eccentric circular 44, either of a specific dielectric layer or of a conductive layer. The circular 44 may be embodied by any circularly shaped form, effecting an increase of covered segment area in a sinusoidal pattern. Thus the sensor disc 49 could e.g. also be produced inversed, i.e. as a dielectric layer disc having a circularly shaped eccentric opening. The sinusoidal pattern may also be created by a number of areas effecting such pattern in combination. The receiving disc 48 is a round conductive plate and is connected to the input of a charge amplifier 5.

The excitation signal will generate charge pulses 21 on the receiver plate and charge amplifier. The charge amplifier 5 signal will be depending on the capacitance between the relevant exiting pie segment S1-S8, the rotating disc 49 and the receiving plate 48. Due to the fact that the rotating dielectric pattern has an out of centre placed circular shape the output pulse of the charge amplifier will have a discrete sinus waveform, build up in a number of steps or blocks, equal to the number of excitation pulses and pie shaped segments (8 as shown in the example).

The output signal of the charge amplifier 5 will through a band pass filter 7 be provided with a sinus shape. The band pass filter 7 is used to reconstruct the sine wave signal and to eliminate disturbance signals outside the used excitation- and/or rotational frequencies of the encoder This sinus signal will then be passed through a comparator 11 which will then produce a square wave signal. This square wave signal will change proportional in phase with the excitation frequency when the sensor disc 49 (with dielectric pattern 44) is rotated.

Comparing the phase of the comparator output signal with one of the excitation pulses by a pulse width modulation generator 26 will give a pulse width modulated (PMW) signal 25 which is linear with the absolute angle of the sensor disc 49 (see Fig. 2).

In one arrangement for embodying the above principle, a charge amplifier known per se is favourably utilised for receiving the signals of the receiver disc 48. It is in this arrangement solely provided with a capacitance element coupled in parallel with a transistor element. The resulting output signal is fed through a band filter 7, and subsequently through a comparator circuit 11 and a pulse width generator for providing a pulse width modulated (PWM-) signal.

One embodiment of such PWM generator known per se is depicted in figure 1 and comprises two D-flipflop elements 12, 13 and an XOR element 14 outputting PWM signal 15. The comparator 11 is in this example embodied by a transistor element 8 of which one leads is grounded. A resistance element 9 is in this example coupled between the output side of the transistor 8 and the ground connection of the element 8. Another embodiment is having the electronic circuit means of the sensor means being integrated in an ASIC chip (Application Specific Integrated Circuit).

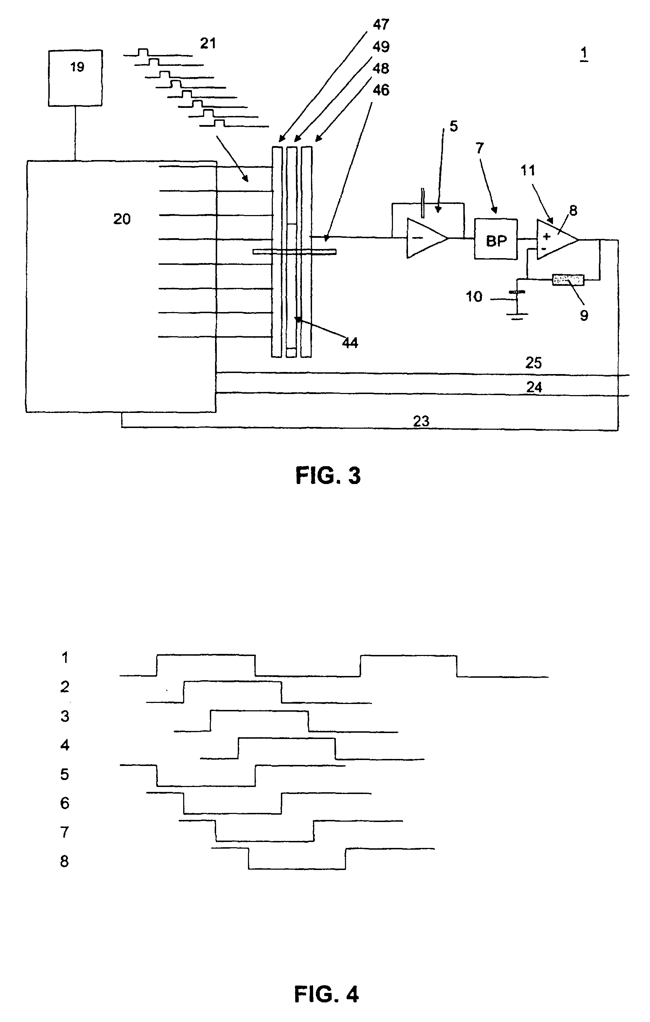

In the above described set up, eight instead of six segments as known from e.g. the inductance sensor of the Beiduncan company are used. This could however also be three segments. Practically a maximum of 64 segments is preferred. With the introduction of a capacitive means 4 it has become easier to add additional segments compared to the inductive principle. The benefit of having more segments is that it makes the band filtering easier to be performed and that in principle it increases the accuracy and/or linearity of the sensor 1. The band pass filter however reconstructs the sine wave and also filters away all "noise" signals outside the frequency applicable for the signals used. Also, the scanning action can be executed faster since the capacitive measurement is immediately converted to an analogue voltage in the charge amplifier 5. Contrary to the novel set up, the inductive principle usually requires an amplitude demodulation of the excitation frequency. Further, it is noted that the phase shift varies with respect to the rotation of the coupler "shading" the electric interaction between exciter and receiver means. However, also a two plate design may be applied, having the exciter and the receiver means combined onto 1 PCB (printed circuit board) and having another PCB with a shaded eccentric form for coupler. In the arrangement according to the invention, the scanning electronic may further be favourably realised by the application of low cost digital electronics, i.e. CMOS circuits. In such further elaboration of the invention, schematically depicted in figure 3, the analogue components utilised are advantageously only composed by a charge amplifier 5, a band pass filter 7 and the comparator 11.

Figure 3 represents a further embodiment of an encoder 1 according to the invention, having a true digital output. It comprises a PAL (programmable array logic) element 20, clocked by a clock element 19, the output of which is inputted to the PAL element 20. The PAL element 20 may be composed by either a CMOS programmable logic device (CPLD, EPLD, CMOS PAL (programmable array logic), or comparable type of integrated circuit (IC) and is preferably embodied with minimally a 10-bit counter. It comprises a phase trigger which reads the value of the ten or more bit counter into a corresponding number of latches, the contents of which is in this embodiment e.g. transferred in two serial RS232 bytes. The PAL element 20 outputs excitation pulses 21, the result of which is via the receiver plate 48 of a sensing means 4 is coupled to the input line 22 of the analogue circuit 5-11, the output 23 of which is connected to an input of the PAL element 20. An output 24 of the PAL element 20 is a Pulse Width Modulated (PWM) signal, while another digital output 25 of the PAL 20 is a ten (10)- bit number, representing the absolute value of an angle measured by the encoder 1.

In the novel arrangement according to figure 3, the scanning is driven by the three lowest bits of the ten (10)- bit counter. The phase difference is then measured by latching this counter at the positive or negative edge of the comparator output signal 23. The ten (10)- bit counter values provide a 10 bit, or digitally 1024 bit resolution, representing 360 degrees of absolute angle measurement by the encoder 18. The design according to figure 3 is favourable since it allows increase of measuring resolution by using a bigger counter having e.g. 12, 14 or 16 bits. For a very wide variety of applications however the resolution of the lower bit value suffices.

Another advantage of the elaboration according to figure 3 is that the CPLD circuitry is able to provide a number of different output formats like Pulse Width Modulated signals, Serial 10 bits or more signals in direct synchrony or asynchrony, RS 232 signals compatible in two bytes of data with or without a parity bit, emittable at various baud rates. The programmable Logic 20 also allows the generation of an alternative excitation pulse scheme. In this pulse scheme the segment measurements are made differentially by measuring the differential capacity of two opposing segments e.g. 1-5, 2-6 for an eight segment exciter. See figure 4. Another embodiment of the PAL 20 is a binary decimal counter (BCD) to generate a decimal number instead of a binary angle data.

The encoder according to the invention has an advantage that no computing step is needed since it operates on the basis of a phase shift in the received and processed signal. Alternatively explained, the number of counts of the counter fitting the phase shift of the PWM signal determines the absolute measure for displacement of the sensor disc. Thus a highly accurate value is achieved by this method since the integration of the counter 3 and the PWM generator in the PAL IC guarantee an excellent synchronisation. Also, since the counter value is directly read out in the IC circuit, a highly reliable encoder is achieved, independent from environment factors such as humidity or temperature, since these only affect the signal strength, not the phase shift thereof which is decisive for the present measuring principle.

In a preferred embodiment a switch capacitor is included in the analogue signal processing circuit. Thus the filter characteristic is made linear with the clock speed, so that via the IC-element easily, i.e. without modifying the circuitry lay out of the encoder, one or both of the scanning frequency and the number of bits of the counter (3) may be adapted. E.g. the frequency could be updated for a fast scanning at low resolution of displacement measuring, while both may be increased for increasing resolution at high scanning rates.

Another advantage compared to known encoding methods is that for acquiring a signal, all segments, i.e. a multiplicity of segments, are read out for generating a signal, rather than one or a differential pair of segments. In the encoder according to the invention the absolute measure for displacement of the sensor disc, alternatively denoted coupler disc, is determined by the exciter base frequency and the phase of the reconstructed sine wave from the analogue processing circuit. At a predetermined instant, e.g. when the PWM signal passes zero, the counter value is read, which is a value for the angle or amount of linear displacement as the case may be.

## Claims

1. Absolute displacement encoder (1) comprising a sensing means (4; 47-49) with a segmented (S1-S8) exciter element (47), a receiver element (48) and a relative moving element (49) incorporated either rotationally moveable or linearly moveable in the encoder between the exciter element and the receiving element, including a part interfering in the electrical interaction between the exciter element and the receiving element, and designed for movement with an external object, e.g. by mechanical coupling e.g. via a central shaft in case of a rotary angle encoder, the encoder further comprising an electronic signal source (2,3) connected to the exciter element (47), and an analogue signal processing circuitry (5-11) connected to the receiving element (48), the sensing means (4; 47-49) being produced as a capacitive sensor means, while the signal source (2, 3) is produced with a clock (2) triggered counter (3), sequentially excitating each exciter segment (S1-S8) with an exciter signal, **characterised in that** the receiver element comprises a receiver segment overlapping with each of the exciter segments (S1-S8) and connected to the signal processing circuitry (5-11), and **in that** the moving element (49) is provided with an eccentric circular (44), either of a specific dielectric layer or of a conductive layer, the circular shape being of any circularly shaped form effecting an increase of covered segment area in a sinusoidal pattern.

2. Encoder according to claim 1, **characterised in that** the analogue processing circuitry comprises coupled in series a charge amplifier element (5) receiving signals form the receiver disc, a filter element (7), and a comparator element (8).

3. Encoder according to claim 1 or 2, **characterised in that** the receiver element (48) has at least one single receiver segment which overlaps all of the exciter segments at least substantially in whole as seen in plan view, and which is connected to the signal processing circuitry.

4. Encoder according to claim 1, 2 or 3, **characterised in that** the encoder is configured so that the moving element can rotate by at least 360 degrees relative to the exciter element and receiver element.

5. Encoder according to any of the preceding claims, **characterised in that** a two plate design is applied, with the exciter and the receiver means combined onto 1 PCB (printed circuit board) and having another PCB with a shaded eccentric form for coupler

6. Encoder according to any of the preceding claims, **characterised in that** the phase shift varies with respect to the rotation of the coupler "shading" the electric interaction between exciter and receiver means.

7. Encoder according to claim 1 **characterised in that** the sinusoidal pattern is created by a number of areas effecting such pattern in combination.

8. Encoder according to the any of the preceding claims, **characterised in that** the filter element (7) is a band filter.

9. Encoder according to any of the preceding claims, **characterised in that** the encoder comprises connected in series to the analogue signal processing means, a pulse width modulated signal generator (26), outputting a pulse width modulated (PWM-) encoder output signal.

10. Encoder according to the preceding claim, **characterised in that** the pulse width modulated signal generator (26) additionally has an input formed by one of the excitation pulses (21) provided by the signal source means (2, 3).

11. Encoder according to any of the preceding claims **characterised in that** the PWM signal is realised by two D-Flip-Flop elements (12, 13) each receiving a PWM generator input signal and each outputting to an XOR element (14).

12. Encoder according to any of the preceding claims **characterised in that** the electronic circuit means of the sensor means is being integrated in an ASIC chip (Application Specific Integrated Circuit chip).

13. Encoder according to any of the preceding claims, **characterised in that** the number of segments (S1-S8) of the exciter element (47) is three ("3") or more.

14. Encoder according to any of the preceding claims, comprising a signal outputting means (11-13), **characterised in that** the signal source means (2, 3) and the signal output means (11-13) are incorporated in an integrated circuit (IC) element (20).

15. Encoder according to claim 14, **characterised in that** the IC element (20) is produced as one of a PAL, a CPLD, an EPLD or a CMOS circuit.

16. Encoder according to claim 14 or 15, **characterised in that** the IC element (20) comprises a bit - type counter having a minimum of four (4) bits.

17. Encoder according to claim 14, 15, or 16, **characterised in that** the programmable Logic (20) also allows the generation of an alternative excitation pulse scheme in which the segment measurements are made differentially by measuring the differential capacity of two opposing segments e.g. 1-5, 2-6 for an eight segment exciter.

18. Encoder according to claim 7 or 8, **characterised in that** the PAL (20) is a binary decimal counter (BCD) to generate a decimal number, directly representing the amount of movement of the moveable element, e.g. as the angle of rotation thereof.

19. Encoder according to any of the claims 13 to 18, **characterised in that** the lowest bits of the counter embodied in the PAL (20), e.g. the lowest three bits in case of an exciter element of eight segments, are used for sequentially triggering the respective segments of the exciter element.

20. Encoder according to any of claims 13 to 19, **characterised in that** the IC-element (20) is triggered by a serial clock-element, e.g. operating at 1 MHZ in combination with a ten ("10") bits counter.

21. Encoder according to any of the claims 14 to 20 **characterised in that** the output signal of the signal processing means is registered by the IC-element (20).

22. Encoder according to any of the preceding claims, **characterised in that** a switch capacitor is incorporated in the analogue signal processing circuit.

23. Encoder according to any of the preceding claims in which the relative moving element has a di-electric active pattern effecting a sinusoidal increase or alternatively decrease of the area of a segment covered by the moving element.

24. Encoder according to any of the preceding claims, **characterised in that** the IC element circuitry processes a latch contents read from the counter before it is outputted, so as to provide an output signal like one of a PWM signal, a serial multi-bit signal, or an RS232 signal compatible in two or more bytes of data.

25. Method of measuring absolute displacement, utilising capacitive encoder means in the form of an encoder according to any of the preceding claims, performing the steps of comparing the phase of a reconstructed sine wave with the excitation pulse sequence, and linearly relating the resulting difference between the excitation signal and the reconstructed sine wave to the absolute position of the sensor disc of the encoder.

## Patentansprüche

1. Absolutverschiebungsencoder (1) mit einem Sensormittel (4; 47-49) mit einem segmentierten (S1-S8) Anregungselement (47), einem Empfangselement (48) und einem Relativbewegungselement (49), welches entweder drehbewegbar oder linear bewegbar zwischen dem Anregungselement und dem Empfangselement im Encoder integriert ist, wobei ein Teil umfasst ist, welches in die elektrische Wechselwirkung zwischen dem Anregungselement und dem Empfangselement eingreift und welches ausgestaltet ist für eine Bewegung mit einem externen Objekt, zum Beispiel durch mechanische Kopplung, zum Beispiel im Falle eines Drehwinkelencoders über eine zentrale Achse, wobei der Encoder weiterhin eine elektronische Signalquelle (2, 3) umfasst, welche mit dem Anregungselement (47) verbunden ist, sowie einen analogen Signalverarbeitungsschaltkreis (5-11), welcher mit dem Empfangselement (48) verbunden ist, wobei das Sensormittel (4; 47-49) als ein kapazitives Sensormittel hergestellt ist, wohingegen die Signalquelle (2, 3) mit einem durch eine Uhr (2) getriggerten Zähler (3) hergestellt ist, wobei jedes Anregungssegment (S1-S8) mit einem Anregungssignal sequenziell angeregt wird, **dadurch gekennzeichnet, dass** das Empfangselement ein Empfängersegment aufweist, welches mit jedem der Anregungssegmente (S1-S8) überlappt und mit dem Signalverarbeitungsschaltkreis (5-11) verbunden ist und dass das Bewegungselement (49) eine exzentrische Kreisscheibe (44) aus entweder einer speziellen dielektrischen Schicht oder einer leitfähigen Schicht aufweist, wobei die kreisförmige Gestalt von beliebiger kreisförmiger gestalteter Form sein kann, welche eine Vergrößerung der bedeckten Segmentfläche gemäß einem sinusförmigen Muster bewirkt.

2. Encoder gemäß Anspruch 1, **dadurch gekennzeichnet, dass** der analoge Verarbeitungsschaltkreis in Reihe geschaltet ein Ladungsverstärkerelement (5), welches Signale von der Empfängerscheibe empfängt, ein Filterelement (7) und ein Vergleichselement (8) aufweist.

3. Encoder gemäß Anspruch 1 oder 2, **dadurch gekennzeichnet, dass** das Empfangselement (48) mindestens ein einzelnes Empfangssegment aufweist, welches alle Anregungssegmente zumindest im Wesentlichen in Draufsicht im Ganzen überlappt und welches mit dem Signalverarbeitungsschaltkreis verbunden ist.

4. Encoder gemäß Anspruch 1, 2 oder 3, **dadurch gekennzeichnet, dass** der Encoder derart ausgestaltet ist, dass das Bewegungselement sich um mindestens 360° relativ zum Anregungselement und Empfangselement drehen kann.

5. Encoder gemäß einem der vorhergehenden Ansprüche, **dadurch gekennzeichnet, dass** eine 2-Platten-Anordnung eingesetzt wird, wobei das Anregungsmittel und das Empfangsmittel auf 1 PCB (printed circuit board) zusammengefasst sind und welches ein weiteres PCB mit einer abgeschatteten exzentrischen Form als Koppler aufweist.

6. Encoder gemäß einem der vorhergehenden Ansprüche, **dadurch gekennzeichnet, dass** die Phasenverschiebung variiert im Hinblick auf die Drehung des Kopplers, welcher die elektrische Wechselwirkung zwischen dem Anregungsmittel und dem Empfangsmittel "abschattet".

7. Encoder gemäß Anspruch 1, **dadurch gekennzeichnet, dass** das sinusförmige Muster erzeugt wird durch eine Anzahl von Flächen, welche in Zusammenwirkung ein derartiges Muster bewirken.

8. Encoder gemäß einem der vorhergehenden Ansprüche, **dadurch gekennzeichnet, dass** das Filterelement (7) ein Bandfilter ist.

9. Encoder gemäß einem der vorhergehenden Ansprüche, **dadurch gekennzeichnet, dass** der Encoder, in Serie geschaltet mit dem analogen Signalverarbeitungsmittel, einen Erzeuger (26) für ein pulsweitenmoduliertes Signal aufweist, welcher ein pulsweitenmoduliertes (PWM-)Encoder-Ausgangssignal ausgibt.

10. Encoder gemäß dem vorhergehenden Anspruch, **dadurch gekennzeichnet, dass** der Erzeuger (26) für ein pulsweitenmoduliertes Signal zusätzlich ein Eingangssignal aufweist, welches durch einen der Anregungspulse (21) gebildet wird, welche von dem Signalquellenmittel (2, 3) zur Verfügung gestellt werden.

11. Encoder gemäß einem der vorhergehenden Ansprüche, **dadurch gekennzeichnet, dass** das PWM-Signal durch zwei D-Flip-Flop-Elemente (12, 13) realisiert wird, wobei jedes ein Eingangssignal des PWM-Erzeugers empfängt und wobei jedes an ein XOR-Element (14) ausgibt.

12. Encoder gemäß einem der vorhergehenden Ansprüche, **dadurch gekennzeichnet, dass** das elektronische Schaltkreismittel des Sensormittels integriert ist in einen ASIC-Chip (Application Specific Integrated Circuit chip).

13. Encoder gemäß einem der vorhergehenden Ansprüche, **dadurch gekennzeichnet, dass** die Anzahl der Segmente (S1-S8) des Anregungselements (47) drei ("3") oder mehr beträgt.

14. Encoder gemäß einem der vorhergehenden Ansprüche mit einem Signalausgabemittel (11-13), **dadurch gekennzeichnet, dass** das Signalquellenmittel (2, 3) und das Signalausgabemittel (11-13) in ein integriertes Schaltkreiselement (IC) (20) integriert sind.

15. Encoder gemäß Anspruch 14, **dadurch gekennzeichnet, dass** das IC-Element (20) entweder als PAL, als CPLD, als EPLD oder als CMOS Schaltkreis erzeugt wird.

16. Encoder gemäß Anspruch 14 oder 15, **dadurch gekennzeichnet, dass** das IC-Element (20) einen Bit-Zähler-artigen Zähler umfasst, welcher ein Minimum von vier (4) Bits aufweist.

17. Encoder gemäß Anspruch 14, 15 oder 16, **dadurch gekennzeichnet, dass** die programmierbare Logik (20) auch die Erzeugung eines alternativen Anregungspulsmusters erlaubt, in welchem die Segmentmessungen differentiell durch Messung der differentiellen Kapazität zweier gegenüberliegender Segmente, zum Beispiel 1-5, 2-6 für einen 8-Segment-Anreger, erfolgen.

18. Encoder gemäß Anspruch 7 oder 8, **dadurch gekennzeichnet, dass** der PAL (20) ein binärer Dezimalzähler (BCD) zur Erzeugung einer Dezimalzahl ist, welche direkt den Umfang der Verschiebung des bewegbaren Elements darstellt, zum Beispiel in Form des Winkels der Drehung des bewegbaren Elements.

19. Encoder gemäß einem der Ansprüche 13 bis 18, **dadurch gekennzeichnet, dass** die niedrigsten Bits des Zählers, welcher durch den PAL (20) verkörpert wird, zum Beispiel die niedrigsten drei Bits im Falle eines Anregungselements von 8 Segmenten, eingesetzt werden für eine sequentielle Triggerung der jeweiligen Segmente des Anregungselements.

20. Encoder gemäß einem der Ansprüche 13 bis 19, **dadurch gekennzeichnet, dass** das IC-Element (20) getriggert wird durch ein serielles Uhr-Element, welches zum Beispiel bei einem MHZ in Kombination mit einem zehn ("10")-Bit-Zähler betrieben wird.

21. Encoder gemäß einem der Ansprüche 14 bis 20, **dadurch gekennzeichnet, dass** das Ausgangssignal des Signalverarbeitungsmittels durch das IC-Element (20) registriert wird.

22. Encoder gemäß einem der vorhergehenden Ansprüche, **dadurch gekennzeichnet, dass** ein Schaltkondensator in den analogen Signalverarbeitungsschaltkreis integriert ist.

23. Encoder gemäß einem der vorhergehenden Ansprüche, wobei das Relativbewegungselement ein dielektrisches aktives Muster aufweist, welches ein sinusförmiges Ansteigen oder alternativ Abfallen der Fläche eines Segments, welche durch das Bewegungselement bedeckt wird, bewirkt.

24. Encoder gemäß einem der vorhergehenden Ansprüche, **dadurch gekennzeichnet, dass** der IC-Element-Schaltkreis einen Signalspeicherinhalt, welcher von dem Zähler gelesen wurde, bevor er ausgegeben wird, verarbeitet, um ein Ausgangssignal zur Verfügung zu stellen, welches ähnlich ist einem PWM-Signal, einem seriellen Multi-Bit-Signal oder einem zu einem RS232-Signal kompatiblen Signal in zwei oder mehr Datenbytes.

25. Verfahren zur Messung einer Absolutverschiebung, wobei ein kapazitives Encodermittel in Form eines Encoders gemäß einem der vorhergehenden Ansprüche eingesetzt wird, wobei der Schritt eines Phasenvergleichs einer rekonstruierten Sinuswelle mit der Anregungspulssequenz durchgeführt wird und der Schritt einer linearen Zuordnung der resultierenden Differenz zwischen dem Anregungssignal und der rekonstruierten Sinuswelle zu der absoluten Position der Sensorscheibe des Encoders.

## Revendications

1. Encodeur de déplacement absolu (1) comprenant un moyen de détection (4 ; 47-49) avec un élément excitateur segmenté (S1-S8) (47), un élément récepteur (48) et un élément à mouvement relatif (49) incorporé mobile en rotation ou mobile linéairement dans l'encodeur entre l'élément excitateur et l'élément récepteur, comprenant une partie interférant dans l'interaction électrique entre l'élément excitateur et l'élément récepteur, et conçu pour se déplacer avec un objet externe, par exemple par couplage mécanique par exemple via un arbre central dans le cas d'un encodeur d'angle de rotation, l'encodeur comprenant en outre une source de signaux électriques (2, 3) connectée à l'élément excitateur (47) et des circuits de traitement de signaux analogiques (5-11) connectés à l'élément récepteur (48), le moyen de détection (4 ; 47-49) étant réalisé comme un moyen de capteur capacitif, alors que la source de signaux (2, 3) est réalisée avec un compteur (3) déclenché par horloge (2), excitant séquentiellement chaque segment d'excitateur (S1-S8) avec un signal d'excitation, **caractérisé en ce que** l'élément récepteur comprend un segment récepteur se chevauchant avec chacun des segments d'excitateur (S1-S8) et connecté aux circuits de traitement de signaux (5-11) et **en ce que** l'élément à mouvement (49) est muni d'un excentrique circulaire (44), soit d'une couche diélectrique spécifique soit d'une couche conductrice, la forme circulaire étant n'importe quel forme profilée circulairement effectuant une augmentation de surface de segment couverte dans un schéma sinusoïdal.

2. Encodeur selon la revendication 1, **caractérisé en ce que** les circuits de traitement analogique comprennent un élément amplificateur de charge (5) recevant des signaux du disque récepteur, un élément de filtre (7) et un élément comparateur (8) couplés en série.

3. Encodeur selon la revendication 1 ou 2, **caractérisé en ce que** l'élément récepteur (48) a au moins un unique segment de récepteur qui chevauche tous les segments d'excitateur au moins sensiblement en totalité comme vu dans une vue en plan et qui est connecté aux circuits de traitement de signaux.

4. Encodeur selon la revendication 1, 2 ou 3, **caractérisé en ce que** l'élément mobile peut tourner sur au moins 360 degrés par rapport à l'élément excitateur et à l'élément récepteur.

5. Encodeur selon l'une quelconque des revendications précédentes, **caractérisé en ce qu'**une conception à deux plaques est appliquée, avec l'excitateur et le moyen récepteur combinés sur une carte de circuit imprimé (PCB) et ayant une autre carte de circuit imprimé avec une forme excentrique ombrée comme coupleur.

6. Encodeur selon l'une quelconque des revendications précédentes, **caractérisé en ce que** le déphasage varie en fonction de la rotation du coupleur « ombrant » l'interaction électrique entre exciteur et moyen récepteur.

7. Encodeur selon la revendication 1, **caractérisé en ce que** le schéma sinusoïdal est créé par une pluralité de zones réalisant ce schéma en combinaison.

8. Encodeur selon l'une quelconque des revendications précédentes, **caractérisé en ce que** l'élément de filtre (7) est un filtre de bande.

9. Encodeur selon l'une quelconque des revendications précédentes, **caractérisé en ce que** l'encodeur comprend, connecté en série avec le moyen de traitement de signaux analogiques, un générateur de signaux à modulation de largeur d'impulsion (26), transmettant en sortie un signal de sortie d'encodeur à modulation de largeur d'impulsion (PWM).

10. Encodeur selon la revendication précédente, **caractérisé en ce que** le générateur de signaux à modulation de largeur d'impulsion (26) a de plus une sortie formée par une des impulsions d'excitation (21) fournies par le moyen de source de signaux (2, 3).

11. Encodeur selon l'une quelconque des revendications précédentes, **caractérisé en ce que** le signal à modulation de largeur d'impulsion est réalisé par deux éléments de bascule D (12, 13) recevant chacun un signal d'entrée de générateur à modulation de largeur d'impulsion et transmettant chacun en sortie à un élément OU EXCLUSIF (14).

12. Encodeur selon l'une quelconque des revendications précédentes, **caractérisé en ce que** le moyen de circuit électronique du moyen de détection est intégré dans une puce ASIC (puce de circuit intégré à application spécifique).

13. Encodeur selon l'une quelconque des revendications précédentes, **caractérisé en ce que** la pluralité de segments (S1-S8) de l'élément excitateur (47) est de trois (« 3 ») ou plus.

14. Encodeur selon l'une quelconque des revendications précédentes, comprenant un moyen de sortie de signaux (11-13), **caractérisé en ce que** le moyen de source de signaux (2, 3) et le moyen de sortie de signaux (11-13) sont incorporés dans un élément à circuit intégré (IC) (20).

15. Encodeur selon la revendication 14, **caractérisé en ce que** l'élément à circuit intégré (20) est produit comme un d'un circuit logique programmable, circuit CLPD, circuit logique programmable effaçable ou circuit CMOS.

16. Encodeur selon la revendication 14 ou 15, **caractérisé en ce que** l'élément à circuit intégré (20) comprend compteur de type binaire ayant un minimum de quatre (4) bits.

17. Encodeur selon la revendication 14, 15 ou 16, **caractérisé en ce que** la logique programmable (20) permet également la génération d'un schéma d'impulsion d'excitation alternatif dans lequel les mesures de segment sont effectuées de manière différentielle en mesurant la capacité différentielle de deux segments opposés par exemple 1-5, 2-6 pour un excitateur à huit segments.

18. Encodeur selon la revendication 7 ou 8, **caractérisé en ce que** le circuit logique programmable (20) est un compteur décimal binaire (BCD) pour générer un nombre décimal, représentant directement la quantité de mouvement de l'élément mobile, par exemple comme l'angle de rotation de celui-ci.

19. Encodeur selon l'une quelconque des revendications 13 à 18, **caractérisé en ce que** les bits les plus faibles du compteur mis en oeuvre dans le circuit logique programmable (20), par exemple les trois bits les plus faibles dans le cas d'un élément excitateur de huit segments, sont utilisés pour déclencher séquentiellement les segments respectifs de l'élément excitateur.

20. Encodeur selon l'une quelconque des revendications 13 à 19, **caractérisé en ce que** l'élément à circuit intégré (20) est déclenché par un élément d'horloge série, par exemple fonctionnant à 1 MHz en combinaison avec un compteur à dix (« 10 ») bits.

21. Encodeur selon l'une quelconque des revendications 14 à 20, **caractérisé en ce que** le signal de sortie du moyen de traitement de signaux est enregistré par l'élément à circuit intégré (20).

22. Encodeur selon l'une quelconque des revendications précédentes, **caractérisé en ce qu'**un condensateur de commutation est incorporé dans le circuit de traitement de signaux analogiques.

23. Encodeur selon l'une quelconque des revendications précédentes, dans lequel l'élément à mouvement relatif a un motif actif diélectrique effectuant une augmentation sinusoïdale ou alternativement une diminution de la surface d'un segment couverte par l'élément mobile.

24. Encodeur selon l'une quelconque des revendications précédentes, **caractérisé en ce que** les circuits de l'élément à circuit intégré élaborent un contenu de bascule lu à partir du compteur avant qu'il ne soit transmis en sortie, de manière à fournir un signal de sortie tel qu'un d'un signal à modulation de largeur d'impulsion, un signal multi-bits sériel ou un signal de RS232 compatible dans deux octets de données ou plus.

25. Procédé de mesure de déplacement absolu, utilisant un moyen encodeur capacitif sous la forme d'un encodeur selon l'une quelconque des revendications précédentes, réalisant les étapes consistant à comparer la phase d'une onde sinusoïdale reconstruite avec une séquence d'impulsions d'excitation et rapporter linéairement la différence résultante entre le signal d'excitation et l'onde sinusoïdale reconstruite à la position absolue du disque de capteur de l'encodeur.
